# FASCICULE DE BREVET EUROPEEN

(11) **EP 2 621 651 B1**
(45) Date de publication et mention de la délivrance du brevet: **14.01.2015**
(21) Numéro de dépôt: 11773781.7
(22) Date de dépôt: 26.09.2011
(51) Int. Cl.: B22F 3/15, C22C 47/06, B29C 70/24

(54) **PROCEDE DE FABRICATION D'UNE PIECE ET PIECE MASSIVE COMPOSITE OBTENUE PAR CE PROCEDE**
VERFAHREN ZUR HERSTELLUNG EINES TEILS UND ANHAND DIESES VERFAHRENS HERGESTELLTES FESTES VERBUNDTEIL
METHOD FOR PRODUCING A PART AND SOLID COMPOSITE PART PRODUCED BY SAID METHOD

(30) Priorité: 28.09.2010 FR 1057799
(43) Date de publication de la demande: 07.08.2013
(73) Titulaire: Snecma, 75015 Paris (FR)
(72) Inventeur: DAMBRINE, Bruno, F-77820 Le Chatelet En Brie (FR); GODON, Thierry, F-93270 Sevran (FR)
(74) Mandataire: Besnard, Christophe Laurent
(86) Numéro de dépôt international: PCT/FR2011/052239
(87) Numéro de publication internationale: WO 2012/042160

(56) Documents cités:
- EP-A1- 1 526 285
- EP-A1- 1 726 677
- WO-A2-2010/061139

## Description

### DOMAINE DE L'INVENTION

Le présent exposé concerne un procédé de fabrication d'une pièce, et une pièce massive composite obtenue par ce procédé.

Plus particulièrement, ladite pièce peut être un bord de renforcement d'aube de soufflante de turbomachine. Un tel bord de renforcement peut équiper tout type de turbomachine, terrestre ou aéronautique, et notamment un turbomoteur d'hélicoptère ou un turboréacteur d'avion.

### ETAT DE LA TECHNIQUE ANTERIEURE

Les aubes de soufflante de turbomachine subissent d'importantes contraintes mécaniques, liées notamment à leur vitesse de rotation, tout en devant satisfaire à des conditions strictes de masse et d'encombrement. L'une des options envisagées pour alléger les aubes est l'utilisation de matériau composite pour leur fabrication. Cependant, les aubes de soufflante de turbomachine doivent également répondre à des critères sévères d'utilisation et, notamment, résister aux impacts de corps étrangers et à l'abrasion. Par exemple, une aube de soufflante avant d'un turboréacteur d'avion doit résister aux impacts des oiseaux percutés en vol et à l'abrasion en vol. Or, lorsque le bord d'attaque d'une aube est réalisé dans le même matériau composite que le corps de l'aube, ce bord d'attaque risque de présenter une résistance insuffisante à l'impact et à l'abrasion.

Pour pallier ce problème, il a été envisagé de consolider l'aube au niveau de son bord d'attaque en utilisant une pièce rapportée sur le corps de l'aube, qui s'intègre au profil aérodynamique de l'aube. Une telle pièce rapportée est appelée bord de renforcement.

Un bord de renforcement est généralement une pièce massive s'étendant longitudinalement suivant une direction sensiblement radiale par rapport à l'axe de rotation de la soufflante, et présentant, en section transversale, un profil de forme générale en "C" avec une portion centrale d'épaisseur importante entourée par des branches effilées. Le bord de renforcement présente ainsi une partie centrale longitudinale d'épaisseur importante, appelée "nez", bordée par des flancs longitudinaux amincis.

L'épaisseur d'un tel bord de renforcement est donc variable, allant typiquement de plusieurs millimètres dans la portion centrale à quelques dixièmes de millimètre seulement (e.g. 0,2 mm) à l'extrémité des branches effilées.

Un bord de renforcement doit également présenter une forme vrillée et cambrée, complémentaire de celle du bord amont du corps d'aube sur lequel il est fixé.

Enfin, un bord de renforcement doit présenter, sur sa face externe, un état de surface lisse pour ne pas nuire aux propriétés aérodynamiques de l'aube et, sur sa face interne, une bonne qualité de rayon de courbure pour épouser parfaitement le bord amont du corps d'aube sur lequel il est fixé.

Il est connu de fabriquer des bords de renforcement par mise en forme à chaud et usinage d'une pièce en alliage de titane. Cependant, du fait des exigences précitées, les opérations de formage et d'usinage sont nombreuses, longues et complexes, ce qui a pour conséquence d'augmenter le coût de fabrication du bord de renforcement. Or, aujourd'hui, le coût de fabrication d'un bord de renforcement selon les procédés de fabrication connus est jugé trop élevé, en particulier parce qu'il représente une partie trop importante du coût de fabrication total de l'aube de soufflante.

Il existe donc un réel besoin pour un procédé de fabrication permettant de fabriquer plus facilement et à moindre coût un bord de renforcement d'aube de soufflante, tout en respectant le mieux possible les exigences précitées.

### PRESENTATION DE L'INVENTION

Le présent exposé a pour objet un procédé de fabrication d'une pièce comprenant les étapes suivantes:
- on réalise au moins une structure fibreuse par tissage tridimensionnel de fils métalliques ;
- on soumet la structure fibreuse à un pressage isostatique à chaud provoquant l'agglomération des fils métalliques, de manière à obtenir une pièce massive.

Dans le présent exposé, ladite pièce massive est également appelée "pièce finale".

La réalisation de la (des) structure(s) fibreuse(s) par tissage tridimensionnel permet d'obtenir une bonne tenue mécanique pour cette (ces) structure(s) et donc pour la pièce finale, en une seule opération

De plus, les fils métalliques entrecroisés par tissage tridimensionnel pouvant se déplacer les uns par rapport aux autres, la déformation de la structure fibreuse est possible, ce qui permet de donner à cette structure, et donc à la pièce finale, une forme complexe, en particulier une forme vrillée et/ou cambrée.

Le tissage tridimensionnel permet également d'obtenir une structure fibreuse, et donc une pièce finale, d'épaisseur variable, cette épaisseur pouvant devenir très faible puisqu'il est possible de réaliser un tissage tridimensionnel continu entre des parties épaisses et des parties très minces.

Un tel procédé est donc parfaitement adapté à la fabrication d'un bord de renforcement d'aube de soufflante de turbomachine.

L'étape de pressage isostatique à chaud - ou HIP pour "hot isostatic pressing" - permet d'assurer, par compaction, la mise en forme finale de la structure fibreuse et sa densification par soudage-diffusion des fils métalliques entre eux. Au final, la pièce massive obtenue présente une porosité nulle ou très faible.

Le pressage isostatique à chaud peut être réalisé sous presse isotherme ou sous sac à autoclave et l'outillage utilisé peut être réutilisé pour plusieurs cycles de fabrication. Par ailleurs, plusieurs pièces peuvent être compactées en même temps. Le coût de fabrication des pièces s'en trouve diminué.

Selon certains modes de mis en oeuvre, la pièce fabriquée s'étend suivant une première direction et présente une épaisseur variable dans un plan perpendiculaire à la première direction; les fils de chaîne utilisés pour le tissage tridimensionnel s'étendent suivant la première direction; et la variation d'épaisseur de la pièce est obtenue en utilisant des fils de chaîne de diamètres différents et, éventuellement, une contexture variable.

Les parties de la pièce de plus grande épaisseur sont généralement fabriquées en utilisant les fils de chaîne de plus grand diamètre.

Lorsque la pièce fabriquée est un bord de renforcement d'aube de soufflante de turbomachine, ladite première direction est la direction longitudinale du bord de renforcement.

Selon certains modes de mise en oeuvre, les fils métalliques utilisés sont :
- des fils en métal ou en alliage métallique, notamment en titane (Ti) ou en alliage de titane, et/ou
- des fils composites comprenant une fibre de céramique centrale, notamment en carbure de silicium (SiC), enduite de métal ou d'alliage métallique, notamment de titane ou d'alliage de titane ou de bore.

Les fils composites sont avantageusement utilisés dans les parties de la pièce les plus sollicitées mécaniquement. Par exemple, dans l'exemple d'un bord de renforcement, les fils composites sont situés du côté soumis aux impacts, c'est-à-dire dans la zone extérieure du bord de renforcement (i.e. la zone située du côté opposé au corps de l'aube).

Selon certains modes de mise en oeuvre, on réalise plusieurs structures fibreuses - ou "sous-structures" - par tissage tridimensionnel, on assemble ces structures fibreuses entre elles, et on soumet l'ensemble - ou "structure finale" - formé par les structures fibreuses assemblées audit pressage isostatique à chaud.

La structure finale présente généralement une configuration multicouche obtenue par empilement de plusieurs sous-structures de géométries et de formes différentes.

Cette solution permet de pallier aux difficultés de tissage, de manipulation ou de mise en forme à froid qui peuvent éventuellement être rencontrées avec une structure fibreuse "monobloc". De telles difficultés peuvent apparaître notamment lorsque la pièce à fabriquer présente des variations d'épaisseur importantes, ces variations d'épaisseur générant des difficultés lors du tissage (notamment en raison de tensions trop importantes dans les fils de plus petits diamètres), ou ne pouvant pas être obtenues en jouant uniquement sur le diamètre des fils de chaîne et la contexture, ou au retour élastique des fils métalliques et/ou de la sous structure elle-même.

L'étape d'assemblage des structures fibreuses (i.e. des sous-structures) entre elles peut être réalisée de différentes manières.

Selon certains modes de mise en oeuvre, les structures fibreuses sont assemblées entre elles par des fils de liaisons implantés, chaque fil de liaison traversant chacune des préformes, au moins en partie. Par exemple, les structures fibreuses sont assemblées par couture de fils métalliques.

Selon certains modes de mise en oeuvre, les structures fibreuses sont assemblées entre elles par drapage, soudage, et/ou collage.

Par ailleurs, selon certains modes de mise en oeuvre, on dispose au moins un insert métallique entre deux structures fibreuses (i.e. deux sous-structures) avant d'assembler celles-ci. Un tel insert permet d'obtenir des parties de grande épaisseur dans la structure finale. Le (les) insert(s) peut être lié aux sous-structures de différentes manières et, par exemple, par soudage, par collage, en étant emprisonné dans deux structures fibreuses et/ou en étant introduit directement dans l'outillage.

Plusieurs modes ou exemples de mises en oeuvre du procédé proposé sont décrits dans le présent exposé. Toutefois, sauf précision contraire, les caractéristiques décrites en relation avec un mode ou un exemple de mise en oeuvre quelconque peuvent être appliquées à un autre mode ou exemple de mise en oeuvre.

Le présent exposé a également pour objet une pièce massive composite comprenant une structure de renfort en fibres de céramique, tissées en trois dimensions, et une matrice en métal ou en alliage métallique.

Du fait de la présence de la structure de renfort en fibres de céramique tissées en trois dimensions, une telle pièce présente une résistance mécanique accrue.

On notera que la structure de renfort ne s'étend pas nécessairement dans toute la pièce mais qu'au contraire elle peut être localisée uniquement dans les zones de la pièce les plus sollicitées mécaniquement.

Selon certains modes de réalisation, ladite pièce massive est un bord de renforcement d'aube de soufflante de turbomachine.

Un tel bord de renforcement peut être fixé, par exemple par collage, sur le corps d'une aube pour protéger celui-ci. Il est généralement destiné à être fixé au niveau du bord d'attaque de l'aube, mais il pourrait aussi être fixé au niveau du bord de fuite.

Selon certains modes de réalisation, ledit bord de renforcement s'étend longitudinalement suivant une première direction et présente, en section transversale (i.e. dans un plan perpendiculaire à la première direction), un profil de forme générale en "C" avec une partie centrale d'épaisseur importante entourée par des branches effilées, et ladite structure de renfort se situe au moins dans la zone extérieure de la partie centrale, i.e. dans la zone de la partie centrale située du côté bombé du profil.

La partie centrale, en particulier du côté extérieur du bord de renforcement, étant la partie la plus exposée aux impacts, la présence de la structure de renfort dans cette partie permet de renforcer celle-ci.

Selon certains modes de réalisation, les fils de chaîne de plus grands diamètres de la structure de renfort se situent au moins dans ladite partie centrale, et au moins du côté extérieur du bord de renforcement.

Les fils de chaîne de plus grands diamètres présentant les meilleures propriétés mécaniques, leur présence dans une partie de la pièce permet d'obtenir un meilleur renforcement mécanique de cette partie.

Le présent exposé a également pour objet une aube de soufflante de turbomachine comprenant un bord de renforcement comme décrit ci-dessus, et une turbomachine comprenant une telle aube de soufflante.

Plusieurs modes ou exemples de réalisation de pièce massive composite sont décrits dans le présent exposé. Toutefois, sauf précision contraire, les caractéristiques décrites en relation avec un mode ou un exemple de réalisation quelconque peuvent être appliquées à un autre mode ou exemple de réalisation.

### BREVE DESCRIPTION DES DESSINS

Les dessins annexés sont schématiques et ne sont pas nécessairement à l'échelle, ils visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés par les mêmes références numériques augmentées de 100, 200, etc.
La FIG 1 représente, en perspective, un exemple d'aube de soufflante de turbomachine équipée d'un exemple de bord de renforcement.
La FIG 2 représente, en perspective, le bord de renforcement de la FIG 1.
La FIG 3 illustre un plan d'armure de tissage tridimensionnel de type interlock.
La FIG 4 illustre un plan d'armure de tissage tridimensionnel de type multicouche.
La FIG 5 représente schématiquement un exemple de structure fibreuse réalisée par tissage tridimensionnel.
La FIG 6 représente la structure fibreuse de la FIG 5 positionnée dans un outil de pressage isostatique à chaud.
La FIG 7 représente la pièce massive obtenue après pressage isostatique à chaud.
La FIG 8 représente deux exemples de structures fibreuses, ou sous-structures, destinées à être assemblées avant pressage isostatique à chaud.
La FIG 9 représente les deux sous-structures de la FIG 8 assemblées.
La FIG 10 représente deux exemples de structures fibreuses, ou sous-structures, et un insert métallique, ces trois éléments étant destinés à être assemblés avant pressage isostatique à chaud.
La FIG 11 représente les trois éléments de la FIG 10 assemblées.

### DESCRIPTION DETAILLEE D'EXEMPLE(S) DE REALISATION

Les exemples de réalisation de l'invention décrits en détail ci-après, en référence aux dessins annexés, visent à illustrer les caractéristiques et avantages de l'invention. Il est toutefois rappelé que l'invention ne se limite pas à ces exemples.

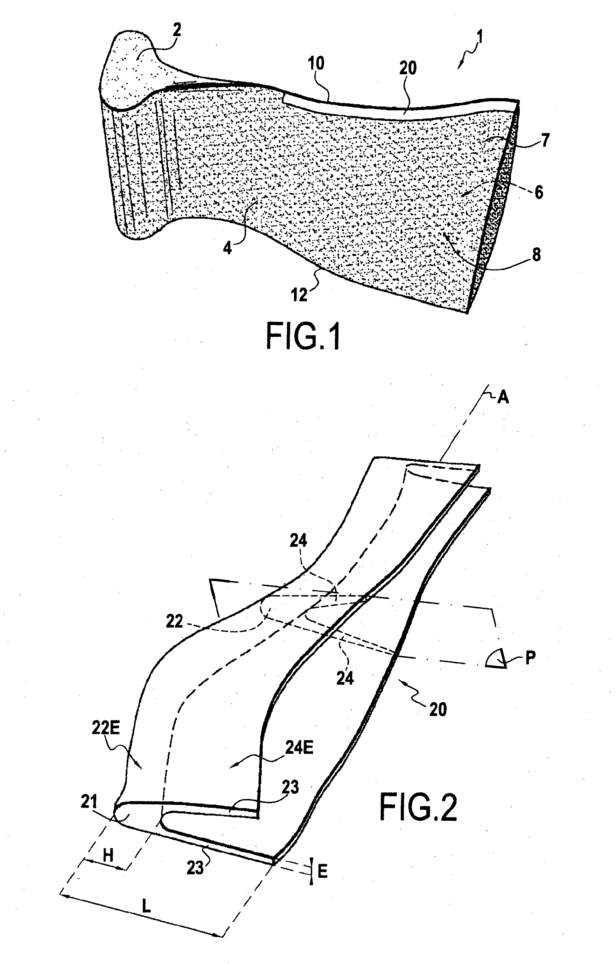

La figure 1 représente une aube 1 de turbomachine, du type aube de soufflante à grande corde. De géométrie complexe, une telle aube 1 comporte un pied 2 prolongé par une pale 4 dans une direction radiale par rapport à l'axe de rotation de la soufflante. La pale 4, destinée à être placée dans la veine de circulation du fluide traversant la turbomachine, est munie de deux surfaces extérieures, respectivement appelées surface d'extrados 6 et surface d'intrados 8. Ces surfaces 6, 8, sont raccordées, en amont, par un bord d'attaque 10 et, en aval, par un bord de fuite 12 (l'amont et l'aval étant définis par rapport au sens d'écoulement normal du gaz à travers la turbomachine). Typiquement, la longueur entre bord d'attaque 10 et bord de fuite 12 est de l'ordre de 500 mm. Des bords de renforcement peuvent être fixés sur le corps 7 de l'aube au niveau du bord de fuite 12 et surtout au niveau du bord d'attaque 10, pour éviter ou simplement retarder leur détérioration, notamment en cas d'impact.

Dans l'exemple représenté, un bord de renforcement 20 est fixé sur le corps 7 de l'aube, au niveau du bord d'attaque 10 de celle-ci. Le bord d'attaque 10 est formé au moins en partie par le bord de renforcement 20 qui épouse le plus possible la forme générale de l'aube, de façon à ne pas altérer les propriétés mécaniques et aérodynamiques de celle-ci.

L'aube 1 de soufflante est de forme complexe, comme représenté sur la FIG 1. En particulier, l'aube est vrillée suivant sa direction longitudinale et cambrée selon sa direction transversale. Le bord de renforcement 20 présente donc également une forme complexe, comme représenté sur la FIG 2.

Plus précisément, le bord de renforcement 20 s'étend longitudinalement suivant une première direction A et présente, en section dans un plan P perpendiculaire à la première direction (i.e. en section transversale), un profil de forme générale en "C" avec une portion centrale 22 d'épaisseur importante entourée par des branches 24 effilées. Le bord de renforcement 20 présente ainsi une partie centrale 21 longitudinale d'épaisseur importante bordée latéralement par deux flancs 23 longitudinaux amincis vers leur extrémité distale. La face extérieure 24E des flancs 23 vient dans la continuité des faces d'intrados 8 et d'extrados 6 de l'aube. La face extérieure 22E de la partie centrale 21 forme le bord d'attaque 10 de l'aube, une fois le bord de renforcement 20 fixé sur le corps 7 de l'aube (voir FIG 1).

Un exemple de dimensions pour un tel bord de renforcement 20 est une longueur L de recouvrement de l'ordre de 20 à 500 mm, par exemple 250 mm, une épaisseur maximum H de la partie centrale 21 (ou de la portion centrale 22) de l'ordre de 1 à 25 mm, par exemple 7 mm, et une épaisseur minimum E des flancs 23 (ou des branches 24) comprise entre 0,1 et 6 mm, par exemple 1 mm, l'épaisseur des flancs 23 diminuant à mesure que l'on se rapproche de l'extrémité de ces flancs 23 (les épaisseurs étant mesurées dans le plan P, perpendiculairement aux tangentes du profil des faces extérieures 22E, 24E). On notera la variation importante de l'épaisseur d'une telle pièce.

Pour fabriquer une pièce comme le bord de renforcement 20, on commence par réaliser au moins une structure fibreuse par tissage tridimensionnel.

On rappelle que le tissage consiste à entrecroiser des fils de chaîne et des fils de trame. Dans la terminologie du tissage, l'"armure" désigne le mode d'entrecroisement des fils de chaîne et des fils de trame.

Dans le présent exposé, par "tissage tridimensionnel" (ou "tissage 3D"), on entend désigner un mode de tissage par lequel certains au moins des fils de chaîne lient des fils de trame sur plusieurs couches de trame.

Le tissage tridimensionnel se distingue donc du "tissage bidimensionnel" (ou "tissage 2D") plus classique dans lequel chaque fil de chaîne passe d'un côté à l'autre de fils d'une seule couche de trame.

Il existe différents mode de tissage tridimensionnel se distinguant par la manière d'entrecroiser les fils de chaîne et les fils de trame. Par exemple, un tissage tridimensionnel peut être de type "interlock" ou "multicouche".

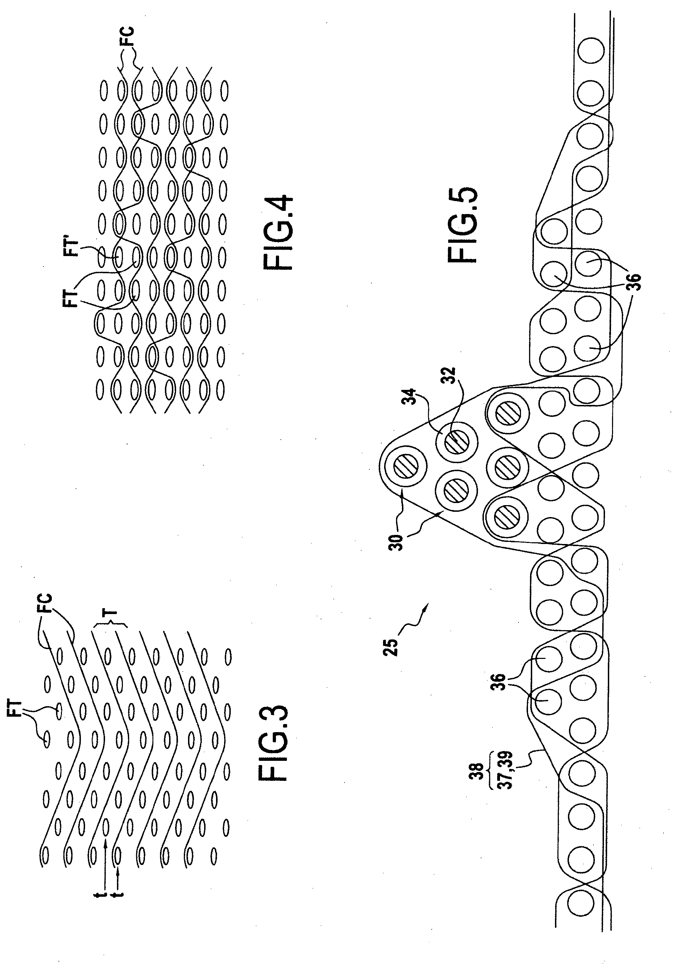

Par "tissage interlock", on entend désigner un tissage 3D avec une armure dont chaque couche de chaîne lie plusieurs couches de trames avec tous les fils de la même colonne de chaîne ayant le même mouvement dans le plan de l'armure. La FIG 3 représente un plan d'une armure interlock à sept couches de fils de chaîne FC et huit couches de fils de trame FT. Dans l'armure interlock illustrée, une couche de trame T est formée de deux demi-couches de trame t adjacentes décalées l'une par rapport à l'autre dans le sens de la chaîne. On a donc seize demi-couches de trame positionnées en quinconce. Chaque fil de chaîne FC lie trois demi-couches de trame. Dans ce qui suit, le terme "couche" pourra être utilisé pour désigner une couche complète ou une demi-couche de fils de trame, sauf indication contraire.

On pourrait aussi adopter pour les fils de trame FT une disposition qui ne serait pas en quinconce, les fils de trame FT de deux couches de trame voisines étant alignés sur les mêmes colonnes.

Par "tissage multicouche", on entend désigner un tissage 3D avec plusieurs couches de fils de trame dont l'armure de base de chaque couche est équivalente à une armure de tissage 2D classique (e.g. une armure de type toile, satin ou sergé) mais avec certains points de l'armure qui lient les couches de trame entre elles. La FIG 4 montre un plan d'une armure de tissage multicouche de type toile, ou "multi-toile", dans lequel des fils de chaîne FC sont de temps en temps déviés de leur trajet de toile 2D classique associé à une couche de trame pour saisir un fil FT d'une couche de trame voisine et former des points de toile particuliers PT liant deux couches de trame voisines. Au niveau d'un point de toile particulier PT, le fil de chaîne FC passe autour de deux fils de trame FT, FT, situés sur une même colonne dans deux couches de trame voisines.

On notera qu'une liaison par un même fil de chaîne FC dans une armure multicouche n'est pas limitée à deux couches de trame voisines mais peut s'étendre sur une profondeur de plus de deux couches de trame.

Enfin, par "contexture", on désigne le nombre de fils par unité de longueur dans le sens de la trame et dans le sens de la chaîne, une contexture faible (ou lâche) signifiant un moins grand nombre de fils, donc un tissu plus ouvert, par opposition à une contexture élevée (ou serrée).

Dans le présent exposé et dans tous les dessins, il est mentionné et représenté par convention et souci de commodité, que ce sont les fils de chaîne qui sont déviés de leurs trajets pour saisir des fils de trame d'une couche de trame ou de plusieurs couches de trames. Toutefois, une inversion des rôles entre chaîne et trame est possible, et doit être considérée comme couverte par les revendications.

Pour fabriquer une pièce comme le bord de renforcement 20 on commence donc par réaliser au moins une structure fibreuse par tissage tridimensionnel de fils métalliques.

La FIG 5 représente un exemple de structure fibreuse 25, réalisée par tissage tridimensionnel des fils métalliques suivants:
- des fils composites 30 de gros diamètre (e.g. 0,5 mm) comprenant une fibre de céramique centrale 32 en carbure de silicium (SiC), recouverte d'un enrobage 34 en alliage de titane (ou de bore), les fils de ce type étant désignés par les personnes du métier "fils SiC/Ti" ou "fils SiC-Ti" ("fils SiC/B" ou "fils SiC-B" pour un enrobage en alliage de bore), et
- des fils 36 de plus petit diamètre (e.g. 0,1 mm) en alliage de titane (e.g. en alliage de type TA6V, Ti 6242, etc.), et
- des fils composites 38 de petit diamètre (e.g. 0,25 mm) comprenant une fibre de céramique 39 centrale en carbure de silicium (SiC), recouverte d'un enrobage 37 en alliage de titane (ou de bore).

Sur la FIG 5, les fils composites 38, les fibres de céramique 39 et leur enrobage 37 sont représentés par un même trait.

Les fils métalliques 30, 36, 38 sont entrecroisés par tissage tridimensionnel de manière à former une seule structure fibreuse, ou structure monobloc. Les fils métalliques 30 et 36 sont utilisés en tant que fils de chaîne et sont orientés sensiblement suivant la première direction A (voir FIG 2), tandis que les fils métalliques 38 sont utilisés en tant que fils de trame.

On notera que les fils métalliques de gros diamètre sont utilisés dans la partie la plus épaisse de la structure fibreuse, le diamètre important de ces fils permettant justement d'obtenir une épaisseur de structure importante.

On notera également que les fibres de céramique 32 et 39 entrecroisées forment une structure de renfort en fibres de céramique tissées en trois dimensions, au sens du présent exposé, et qu'à l'image des fils composites 30, les fibres de céramique de plus gros diamètre sont les fibres de céramique 32.

On notera enfin que les fils métalliques utilisés pourraient tous être en matériau composite ou tous être en métal ou en alliage (par exemple en alliage de type TA6V, Ti 6242, etc.). De même, les fils métalliques utilisés pourraient tous être de même diamètre.

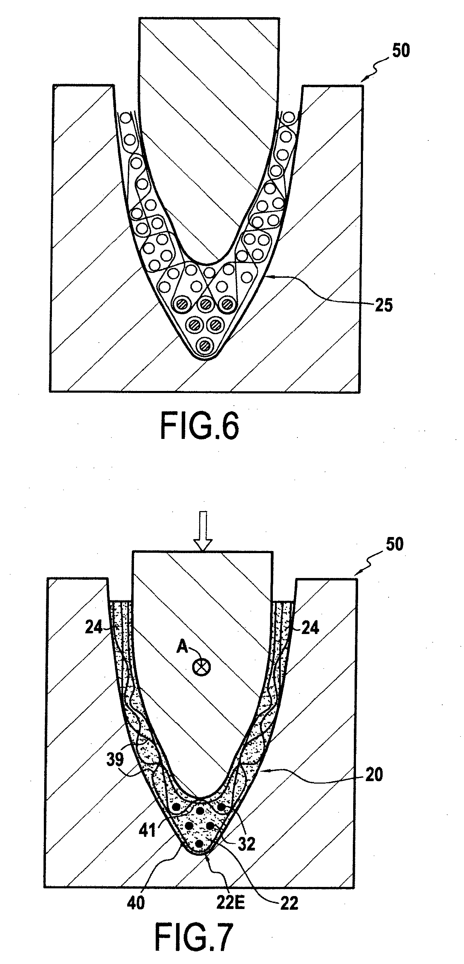

La structure fibreuse de la FIG 5 est ensuite disposée à l'intérieur d'un outillage 50 représenté schématiquement sur la FIG 6, puis soumise à un pressage isostatique à chaud. Dans l'exemple représenté, la structure fibreuse a été maintenue à 940°C, pendant 120 min, sous une pression de 1000 bars.

A l'issue du pressage isostatique à chaud, on obtient le bord de renforcement 20 de la FIG 2, ce bord de renforcement 20 étant représenté schématiquement, en coupe transversale, sur la FIG 7.

Ce bord de renforcement 20 est un exemple de pièce massive composite, au sens du présent exposé. Il comprend une structure de renfort 40 en fibres de céramique 32, 39 tissées en trois dimensions, et une matrice 41 en alliage métallique. Cette matrice 41 résulte de l'agglomération par compaction et soudage-diffusion de l'enrobage 34 en alliage de titane des fils 30, de l'enrobage 37 en alliage de titane des fils 38, et des fils 36 en alliage de titane.

On notera que le bord de renforcement 20 s'étend suivant une première direction A (voir FIGS 2 et 7), qu'il présente une épaisseur variable dans un plan perpendiculaire à cette première direction A, et que les fibres de céramique 32 formant fils de chaîne dans la structure de renfort 40 tissée, s'étendent également suivant la première direction A. En outre, la structure de renfort 40 présente, dans la partie du bord de renforcement 20 de plus grande épaisseur, les fils de chaîne de plus gros diamètre.

Comme précédemment indiqué, la partie du bord de renforcement 20 la plus exposée aux impacts est la partie centrale 22, et plus précisément la zone de la partie centrale 22 située du côté extérieur du bord de renforcement (i.e. du côté de la face extérieure 22E). Cette zone est appelée ci-après "zone sensible".

On notera que la structure de renfort 40 en fibres de céramique 32, 39, tissées en trois dimensions se situe justement dans ladite zone sensible, de manière à renforcer celle-ci. On notera que les fils de chaîne de plus grands diamètres (i.e. les fibres de céramique 32) de la structure de renfort 40, qui sont les fils de la structure 40 qui présentent la meilleure résistance mécanique, se situent également dans cette zone sensible de manière à renforcer encore mieux cette zone.

Bien entendu, la structure de renfort 40 pourrait s'étendre dans d'autres zones du bord de renforcement 20, voire dans l'ensemble de celui-ci, dans toutes les directions.

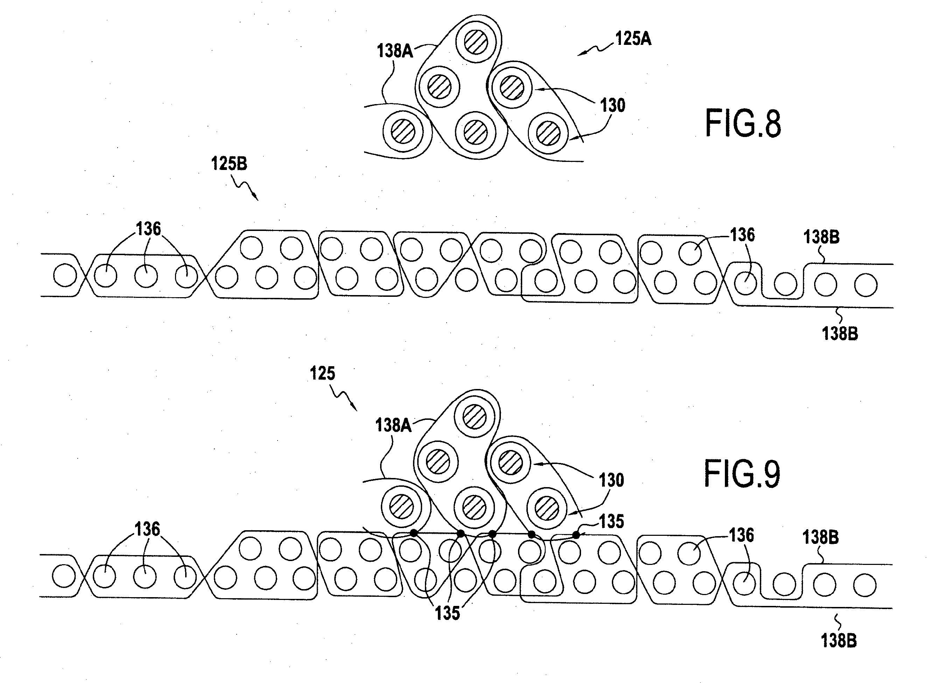

La FIG 8 représente deux autres exemples de structures fibreuses, dites sous-structures 125A, 125B, destinées à être assemblées pour former une seule structure fibreuse, dite structure finale 125. Les deux sous structures 125A, 125B sont obtenues par tissage tridimensionnel de fils métalliques, la sous-structure 125A étant obtenue par entrecroisement de fils de chaîne 130 et de fils de trame 138A, et la sous-structure 125B étant obtenue par entrecroisement de fils de chaîne 136 et de fils de trame 138B.

Les fils de chaîne 130, 136, et de trame 138A, 138B, peuvent être des fils composites ou non. Dans l'exemple, les fils 130 et 138A sont des fils composites comprenant, à coeur, une fibre de céramique en carbure de silicium, et un enrobage en alliage de titane (ou de bore). Les fils 136 et 138B sont des fils en alliage de titane.

Dans l'exemple, les fils de chaîne 130 de la sous-structure 125A sont de plus gros diamètre que les fils de chaîne 136 de la sous-structure 125B, ce qui a pour avantage de tisser moins de fils et d'obtenir une sous-structure 125A plus souple puisque d'une contexture plus faible.

Dans l'exemple, les sous-structures 125A et 125B ont été assemblées par soudage/collage par point comme représenté schématiquement sur la FIG 9, par les points 135.

La structure finale 125 résultant de l'assemblage des sous-structures 125A et 125B présente des avantages analogues à ceux de la structure 25 de la FIG 5 et présente, en outre, les possibilités suivantes:
- l'orientation différentielle des sous-structures entre elles, est possible;
- des variations de forme et d'épaisseur importantes entre les sous-structures sont possibles, ce qui permet d'obtenir au niveau de la structure finale des variations de forme et d'épaisseur importantes, difficiles à obtenir autrement;
- une géométrie particulière à plat est possible pour une des sous-structures tissées.

La structure finale 125 subit ensuite un pressage isostatique à chaud comme précédemment décrit en référence aux FIGS 6 et 7, de manière à obtenir un bord de renforcement (non représenté) analogue au bord de renforcement 20.

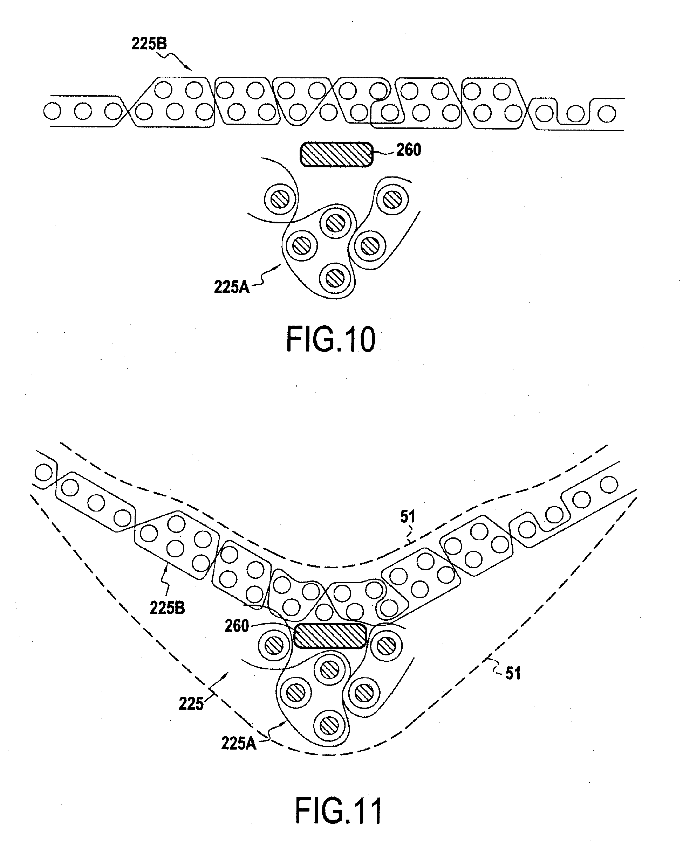

La FIG 10 représente deux autres exemples de structures fibreuses, dites sous-structures 225A, 225B, destinées à être assemblées, ainsi qu'un insert métallique 260. Cet insert 260 est disposé entre les deux structures fibreuses 225A, 225B, avant d'assembler l'ensemble. Dans l'exemple, les deux structures fibreuses 225A, 225B, et l'insert sont introduit librement dans un outillage 51 représenté en pointillés sur la FIG 11.

L'insert 260 pourrait également être introduit entre deux sous-structures soudées/collées entre elles, attaché via un/des fils métalliques à/aux sous-structures, voire soudé/collé à une ou des sous-structures, puis introduit dans un outillage.

L'insert 260 peut avoir des picots qui permettent son accrochage sur au moins une des sous-structures.

La présence de l'insert métallique 260 permet d'augmenter l'épaisseur de la structure finale 225, et donc du bord de renforcement 20 fabriqué. Les FIGS 9 et 11 illustrent, par comparaison, cette augmentation d'épaisseur. En outre, l'insert métallique 260 peut être formé par un procédé du type forgeage, usinage, il peut être coulé, il peut aussi être de type profilé. L'insert 260 peut ainsi présenter (et donc transmettre à la structure finale 225) une forme qui pourrait être difficile à obtenir par tissage.

La structure finale 225 résultant de l'assemblage des sous-structures 225A et 225B et de l'insert 260 présente par ailleurs des avantages analogues à ceux de la structure 25 de la FIG 5.

La structure finale 225 subit ensuite un pressage isostatique à chaud comme précédemment décrit, en référence aux FIGS 6 et 7, de manière à obtenir un bord de renforcement (non représenté) analogue au bord de renforcement 20.

Ce bord de renforcement comprend une structure de renfort en fibres de céramique tissées en trois dimensions, et une matrice en alliage métallique. Cette matrice résulte de l'agglomération par compaction et soudage-diffusion des parties métalliques des sous-structures 225A, 225B, et de l'insert métallique 260.

## Revendications

1. Procédé de fabrication d'une pièce comprenant les étapes suivantes:
- on réalise au moins une structure fibreuse (25) par tissage tridimensionnel de fils métalliques;
- on soumet la structure fibreuse (25) à un pressage isostatique à chaud provoquant l'agglomération des fils métalliques, de manière à obtenir une pièce massive.

2. Procédé selon la revendication 1, dans lequel ladite pièce s'étend suivant une première direction et présente une épaisseur variable dans un plan perpendiculaire à la première direction, dans lequel les fils de chaîne utilisés pour le tissage tridimensionnel s'étendent suivant la première direction, et dans lequel la variation d'épaisseur de la pièce est obtenue en utilisant des fils de chaîne de diamètres différents et, éventuellement, une contexture variable.

3. Procédé selon la revendication 1 ou 2, dans lequel les fils métalliques sont:
- des fils (36) en métal ou en alliage métallique, notamment en titane ou en alliage de titane, et/ou
- des fils composites (30, 38) comprenant, à coeur, une fibre de céramique (32, 39), notamment en carbure de silicium, et un enrobage (34, 37) en métal ou en alliage métallique, notamment en titane ou en alliage de titane ou de bore.

4. Procédé selon l'une quelconque des revendications 1 à 3, dans lequel on réalise au moins deux structures fibreuses (125A, 125B; 225A, 225B) par tissage tridimensionnel, on assemble ces structures fibreuses entre elles, et on soumet l'ensemble (125, 225) formé par les structures fibreuses assemblées audit pressage isostatique à chaud.

5. Procédé selon la revendication 4, dans lequel on dispose un insert métallique (260) entre les deux structures fibreuses (225A, 225B) avant d'assembler celles-ci.

6. Procédé selon l'une quelconque des revendications 1 à 5, dans lequel ladite pièce est un bord de renforcement (20) d'aube de soufflante de turbomachine.

7. Pièce massive composite comprenant une structure de renfort (40) en fibres de céramique (32, 39) tissées en trois dimensions, et une matrice (41) en métal ou en alliage métallique.

8. Pièce massive composite selon la revendication 7, constituant un bord de renforcement (20) d'aube de soufflante de turbomachine.

9. Pièce massive composite selon la revendication 8, dans laquelle le bord de renforcement (20) s'étend longitudinalement suivant une première direction (A) et présente, en section dans un plan perpendiculaire à la première direction (A), un profil de forme générale en "C" avec une partie centrale (22) de plus grande épaisseur et des branches (24) effilées, et dans laquelle la structure de renfort (40) en fibres de céramique tissées en trois dimensions se situe au moins dans la zone extérieure de la partie centrale (22).

10. Pièce massive composite selon la revendication 9, dans laquelle les fils de chaîne de plus grands diamètres de la structure de renfort (40) se situent au moins dans la zone extérieure de la partie centrale (22).

11. Aube de soufflante de turbomachine comprenant un bord de renforcement (20) selon l'une quelconque des revendications 8 à 10.

12. Turbomachine comprenant une aube de soufflante selon la revendication 11.

## Patentansprüche

1. Verfahren zur Herstellung eines Teils, umfassend die folgenden Schritte:
- es wird wenigstens eine Faserstruktur (25) durch dreidimensionales Weben von Metallfäden hergestellt,
- die Faserstruktur (25) wird einem heißisostatischen Pressen unterzogen, das das Verdichten der Metallfäden bewirkt, so dass ein massives Teil erhalten wird.

2. Verfahren nach Anspruch 1, wobei das Teil sich entlang einer ersten Richtung erstreckt und eine veränderliche Dicke in einer zu der ersten Richtung senkrechten Ebene aufweist, wobei die für das dreidimensionale Weben verwendeten Kettfäden entlang der ersten Richtung verlaufen und wobei die Dickenänderung des Teils durch Verwendung von Kettfäden mit unterschiedlichen Durchmessern und eventuell einer veränderlichen Fadendichte erreicht wird.

3. Verfahren nach Anspruch 1 oder 2, wobei die Metallfäden sind:
- Fäden (36) aus Metall oder aus Metalllegierung, insbesondere aus Titan oder aus Titanlegierung, und/oder
- Verbundfäden (30, 38), die im Kern eine Keramikfaser (32, 39), insbesondere aus Siliciumcarbid, und eine Ummantelung (34, 37) aus Metall oder aus Metalllegierung, insbesondere aus Titan oder aus Titan- oder Borlegierung, umfassen.

4. Verfahren nach einem der Ansprüche 1 bis 3, wobei wenigstens zwei Faserstrukturen (125A, 125B; 225A, 225B) durch dreidimensionales Weben hergestellt werden, diese Faserstrukturen untereinander verbunden werden und das durch die verbundenen Faserstrukturen gebildete Ganze (125, 225) dem heißisostatischen Pressen unterzogen wird.

5. Verfahren nach Anspruch 4, wobei ein Metalleinsatz (260) zwischen den beiden Faserstrukturen (225A, 225B) vor deren Verbinden angeordnet wird.

6. Verfahren nach einem der Ansprüche 1 bis 5, wobei das Teil ein Verstärkungsrand (20) einer Gebläseschaufel einer Turbomaschine ist.

7. Massives Verbundteil, umfassend eine Verstärkungsstruktur (40) aus dreidimensional gewebten Keramikfasern (32, 39) und eine Matrix (41) aus Metall oder aus Metalllegierung.

8. Massives Verbundteil nach Anspruch 7, das einen Verstärkungsrand (20) einer Gebläseschaufel einer Turbomaschine bildet.

9. Massives Verbundteil nach Anspruch 8, wobei der Verstärkungsrand (20) sich längs in einer ersten Richtung (A) erstreckt und im Querschnitt in einer zu der ersten Richtung (A) senkrechten Ebene ein allgemein C-förmiges Profil mit einem mittleren Teil (22) größerer Dicke und mit spitz zulaufenden Schenkeln (24) aufweist, und wobei die Verstärkungsstruktur (40) aus dreidimensional gewebten Keramikfasern sich wenigstens im äußeren Bereich des mittleren Teils (22) befindet.

10. Massives Verbundteil nach Anspruch 9, wobei die Kettfäden mit größerem Durchmesser der Verstärkungsstruktur (40) sich wenigstens im äußeren Bereich des mittleren Teils (22) befinden.

11. Gebläseschaufel einer Turbomaschine, umfassend einen Verstärkungsrand (20) nach einem der Ansprüche 8 bis 10.

12. Turbomaschine, umfassend eine Gebläseschaufel nach Anspruch 11.

## Claims

1. A method of fabricating a part, the method comprising the following steps:
• making at least one fiber structure (25) by three-dimensionally weaving metal yarns; and
• subjecting the fiber structure (25) to hot isostatic pressing so as to cause the metal yarns to agglomerate in such a manner as to obtain a solid part.

2. The method according to claim 1, wherein said part extends in a first direction and presents thickness that varies in a plane perpendicular to the first direction, wherein the warp yarns used for the three-dimensional weaving extend along the first direction, and wherein the variation in the thickness of the part is obtained by using warp yarns of different diameters and optionally by varying contexture.

3. The method according to claim 1 or 2, wherein the metal yarns are:
• yarns (36) made of metal or metal alloy, in particular of titanium or titanium alloy; and/or
• composite yarns (30, 38) comprising a ceramic fiber core (32, 39), in particular a silicon carbide core, and a metal or metal alloy coating (34, 37) in particular made of titanium or of titanium alloy or of boron alloy.

4. The method according to any one of claims 1 to 3, wherein at least two fiber structures (125A, 125B; 225A, 225B) are made by three-dimensional weaving and these fiber structures are assembled together, with the assembly (125, 225) formed by these assembled-together fiber structures being subjected to said hot isostatic pressing.

5. The method according to claim 4, wherein a metal insert (260) is placed between the two fiber structures (225A, 225B) before they are assembled together.

6. The method according to any one of claims 1 to 5, wherein said part is a reinforcing edge (20) for a turbomachine fan blade.

7. A composite solid part comprising a reinforcing structure (40) of three-dimensionally woven ceramic fibers (32, 39) and a metal or metal alloy matrix (41).

8. The composite solid part according to claim 7, constituting a reinforcing edge (20) for a turbomachine fan blade.

9. The composite solid part according to claim 8, wherein the reinforcing edge (20) extends longitudinally in a first direction (A) and presents, in section in a plane perpendicular to the first direction (A), a profile that is generally C-shaped with a central portion (22) of greater thickness and tapering branches (24), and wherein the reinforcing structure (40) of three-dimensionally woven ceramic fibers is situated at least in the outside zone of the central portion (22).

10. The composite solid part according to claim 9, wherein the larger-diameter warp yarns of the reinforcing structure (40) are situated at least in the outside zone of the central portion (22).

11. A turbomachine fan blade including a reinforcing edge (20) according to any one of claims 8 to 10.

12. A turbomachine including a fan blade according to claim 11.
